(19) **Europäisches Patentamt**

**European Patent Office**

**Office européen des brevets**

(11) **EP 0 703 120 B1**

(12) **EUROPÄISCHE PATENTSCHRIFT**

(45) Veröffentlichungstag und Bekanntmachung des Hinweises auf die Patenterteilung:
**15.03.2000 Patentblatt 2000/11**

(51) Int Cl.⁷: **B60R 21/04**, B64D 25/04

(21) Anmeldenummer: **95810563.7**

(22) Anmeldetag: **12.09.1995**

(54) **Aufprall-Wandelement**

Impact absorbing element of a wall

Elément de paroi absorbant des chocs

(84) Benannte Vertragsstaaten:
**CH DE FR GB LI**

(30) Priorität: **18.09.1994 CH 282194**

(43) Veröffentlichungstag der Anmeldung:
**27.03.1996 Patentblatt 1996/13**

(73) Patentinhaber: **Bucher Leichtbau AG**
**8117 Fällanden (CH)**

(72) Erfinder: **Bucher, Peter**
**CH-8330 Pfäffikon (CH)**

(56) Entgegenhaltungen:
**EP-A- 0 521 223          DE-A- 2 434 175**
**DE-U- 9 402 743          US-A- 3 224 924**
**US-A- 3 493 244          US-A- 3 810 656**
**US-A- 3 834 482          US-A- 3 843 155**
**US-A- 3 929 948          US-A- 4 042 057**
**US-A- 4 893 521          US-A- 5 096 223**
**US-A- 5 370 417**

• **PATENT ABSTRACTS OF JAPAN vol. 010 no. 081 (M-465) ,29.März 1986 & JP-A-60 222345 (NISSAN JIDOSHA KK) 6.November 1985,**

**Beschreibung**

Die Erfindung betrifft ein Aufprall-Wandelement zum schonenden Abbremsen eines auf ein Hindernis aufprallenden menschlichen Körper, insbesondere des Kopfaufpralls in Fahrzeugen oder Flugzeugen gemäss Oberbegriff von Anspruch 1. Bei Unfällen von Passagierfahrzeugen, z.B. bei Zusammenstössen, Überschlägen, Notbremsungen oder bei Notlandungen von Flugzeugen treten starke Bewegungsänderungen des Fahrzeugs auf, so dass die Insassen auf innere Begrenzungen des Passagierraums aufprallen. Beispielsweise wird auch bei angegurteten Passagieren in Flugzeugen der Oberkörper und vor allem der Kopf bei einer starken Abbremsung des Flugzeugs nach vorne geworfen und kann dort z.B. auf Trennwände oder vordere Sitze aufschlagen. Es werden deshalb Wandelemente für exponierte Stellen gesucht, welche ein möglichst schonendes und Verletzungen vermeidendes Abfangen von aufprallenden Passagieren erlaubt. Dies gilt generell für den Fall, wenn ein menschlicher Körper mit hoher Relativgeschwindigkeit auf ein Hindernis auftritt. Dies kann auch in stationären Anlagen auftreten, wo das Problem besteht, Stürze schonend aufzufangen und Sturzverletzungen zu vermeiden.

Aus der gattungsbildenden US-A-3 493 244 ist z.B. ein Aufprall-Element mit mindestens zwei Zonen bekannt, wobei eine obere erste Zone eine harte Hammerschicht mit einer keilförmigen oder pyramidenförmigen Struktur aus Hartplastik aufweist, welche bei einem Aufprall in eine untere Wabenschicht als zweite Zone eindringt und diese plastisch zusammendrückt. Diese bekannte Struktur kann jedoch die nachstehende Aufgabe nicht erfüllen.

Es sind verschiedene Wandelemente und Polsterungen aus Schaumstoffen bekannt, welche jedoch meist eine ungünstige progressive Federwirkung aufweisen und welche den Bauraum relativ schlecht ausnützen. Es wurden auch schon wabenartige Strukturen vorgeschlagen, welche jedoch meist zu steif sind und welche auch eine ungünstige, nicht berührungssichere Oberfläche aufweisen. Die Problematik des Aufpralls von menschlichen Körpern wurde beispielsweise diskutiert in "Design of a Pedestrian Compatible Car Front"; Gaegauf, Kaeser, Meyer, Reif in "International Research Committee on the Biomechanics of Impact"; Conference Proceedings 1986, Seite 205. Hier liegt jedoch ein ganz anderes Thema vor, nämlich das hohe Verletzungsrisiko von Fussgängern beim Zusammenstoss mit der relativ harten und steifen Automobilaussenfront zu untersuchen und allfällig zu verringern. Es ist daher auch keine geeignete Lösung der vorliegenden Aufgabe angegeben, hingegen werden die Verträglichkeitsgrenzen des menschlichen Körpers bei Zusammenstössen erläutert. Auch die Anwendung von Airbags wurde ausführlich untersucht, wobei diese jedoch nur beschränkt einsetzbar und überdies sehr teuer sind.

Die Aufgabe der vorliegenden Erfindung liegt darin, ein universell einsetzbares, leichtes Aufprall-Wandelement zu schaffen, welches die Nachteile bisheriger Ausführungen überwindet und welches bei möglichst geringer Wandstärke und Bauvolumen und auf möglichst kurzem Weg ein schonendes und Verletzungen verhinderndes Abbremsen eines aufprallenden menschlichen Körpers ergibt, insbesondere für den Kopfaufprall. Zudem soll das Wandelement auch einfach und kostengünstig herstellbar sein und eine anfassfeste Oberfläche und ein günstiges Brand- und Toxizitätsverhalten aufweisen.

Das Wandelement soll in entsprechender Auslegung sowohl für einen Aufprall mit hoher Geschwindigkeit, z. B in Fahrzeugen, wie auch mit niedrigerer Geschwindigkeit in stationären Anlagen einsetzbar sein.

Die Lösung der Aufgabe besteht in einem Aufprall-Wandelement nach Patentanspruch 1.

Die deformierbaren Strukturelemente der Wand, d.h. die Sandwich-Deckplatte mit Deckschichten und Stützkern sowie die Abstandselemente, wirken dabei so zusammen, dass ein optimal schonendes Abbremsen auf kürzestmöglichem Weg erfolgt. Die abhängigen Patentansprüche betreffen besonders vorteilhafte Weiterbildungen der Erfindung bezüglich der Strukturelemente, deren Anordnung, Ausgestaltung und Dimensionierung sowie der funktionalen Auslegung für einen sehr weiten Bereich von Anwendungen.

Im folgenden wird die Erfindung anhand von Beispielen und Figuren weiter erläutert.

Es zeigen:

| | |
|---|---|
| Fig. 1a, b | ein erfindungsgemässes Wandelement, |
| Fig. 2a, b, c | verschiedene Beispiele von Abstandselementen, |
| Fig. 3, 4 | mögliche gitterartige Anordnungen der Abstandselemente, |
| Fig. 5 | die Funktion der Deckplatte, |
| Fig. 6 | die Funktion der Abstandselemente, |
| Fig. 7 | die kombinierte Funktion der beiden Zonen, |
| Fig. 8 | das Zusammenwirken der Kräfte, |
| Fig. 9 | den Verlauf der Aufprallkräfte, |
| Fig. 10 | einen gemessenen Verlauf der Aufprall-Verzögerung, |
| Fig. 11 | den Aufprall zweier Körperteile, |
| Fig. 12 | Beispiele von Kraftverläufen, |
| Fig. 13 | eine Unterteilung in Wandsektoren, |
| Fig. 14 | eine Flugzeugtrennwand, |
| Fig. 15 | verschiedene Formen von Wandelementen, |
| Fig. 16 | Bodenplatten in stationären Anwendungen. |

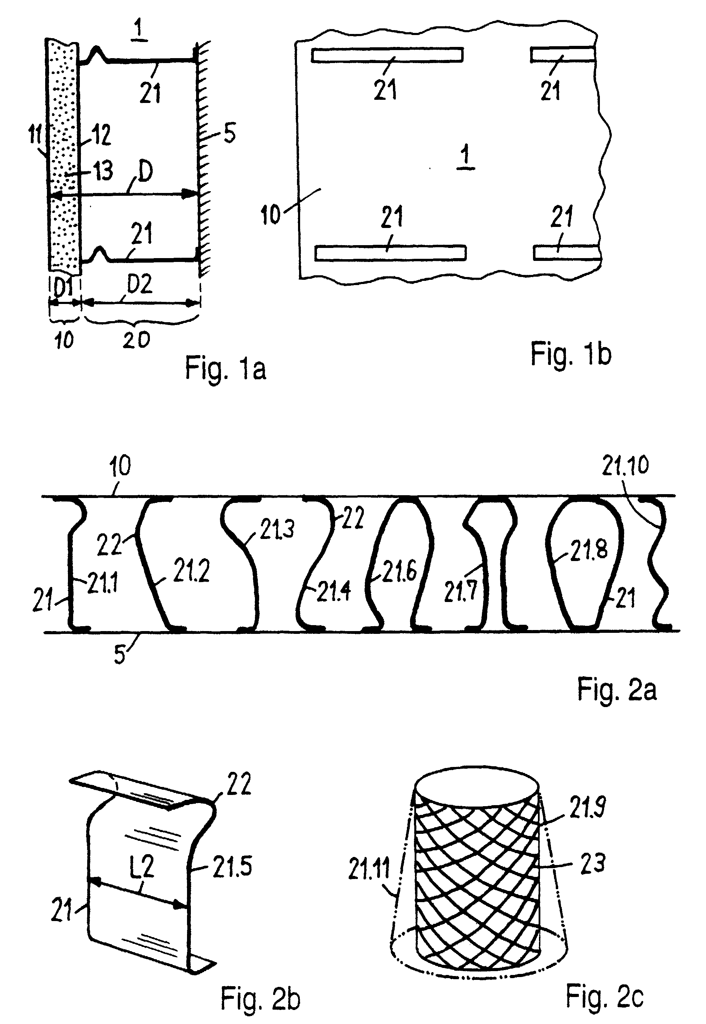

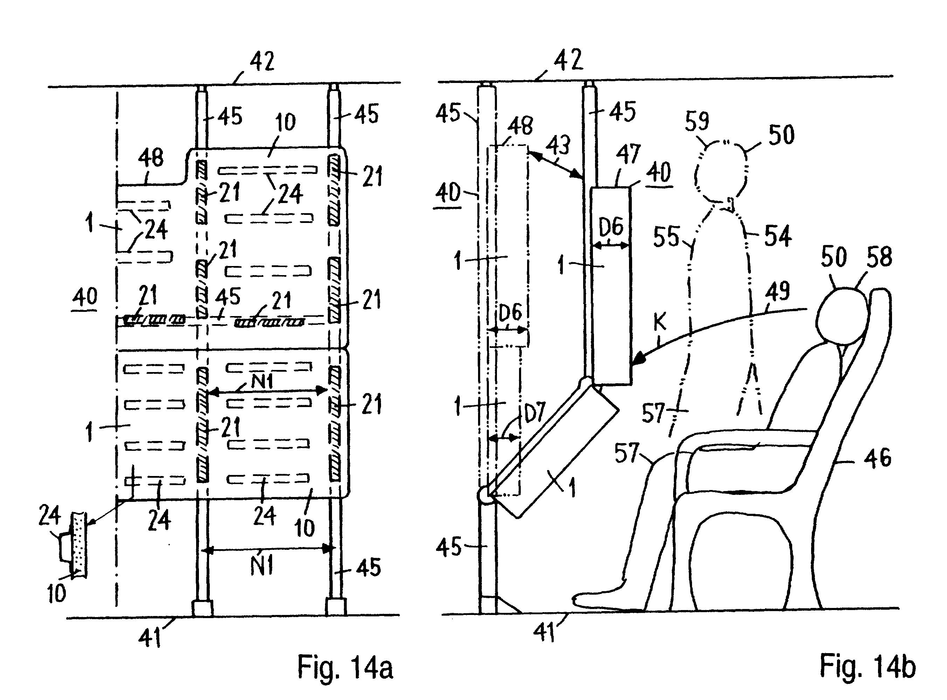

Der Aufbau des erfindungsgemässen Aufprall-Wandelements 1 wird in den Figuren 1a, b in zwei Ansichten dargestellt. Das Wandelement weist einen Zweizonenaufbau auf, wobei die erste Zone aus einer leichten, plastisch deformierbaren Sandwich-Deckplatte oder -Deckschale 10 besteht. Diese weist einen leichten, deformierbaren Stützkern 13 mit Hohlräumen zwischen einer oberen Deckschicht 11 und einer unteren Deckschicht 12 auf. Die zweite Zone 20 weist plastisch deformierbare Abstandselemente 21 auf, welche in Abständen zueinander angeordnet und gleichmässig über die Fläche des Wandelements 1 verteilt sind. Diese Abstandselemente 21 tragen die Deckplatte 10 und sind auf eine feste Unterlage 5, z.B. in Form einer massiven Wand oder auf einen Rahmen (Fig. 14), abgestützt. Die Dicke D2 der zweiten Zone 20 beträgt dabei mehr als das Doppelte der Dicke D1 der ersten Zone 10. Vorzugsweise beträgt die Dicke D2 sogar das drei- bis zehnfache der Dicke D1. Die Figur 1b zeigt einen Ausschnitt in einer Aufsicht des Wandelements 1 mit vier einzelnen, voneinander beabstandeten Abstandselementen 21. Die Dicke des ganzen Wandelements 1 beträgt D = D1 + D2.

Die Figuren 2a, b, c zeigen verschiedene Ausführungsformen von Abstandselementen. Vorzugsweise sind sie so geformt, dass auch bei einem Aufprall direkt und senkrecht auf ein Abstandselement bzw. auf die Deckplatte keine ausgeprägten Kraftspitzen zu Beginn der Deformation auftreten. Dazu dient beispielsweise eine Vorstauchstelle oder Vorstauchbiegung 22. Die Figur 2a zeigt im Querschnitt Beispiele von wandartigen, flächigen Abstandselementen 21.1 bis 21.4 sowie zwei Beispiele von bogenförmigen Elementen 21.6 und 21.7, ein röhrenartiges Abstandselement 21.8. und ein Element 21.10 mit mehrfachen wellenförmigen Biegungen. Figur 2b zeigt ein Beispiel eines blattförmigen Abstandselements 21.5 mit einer Vorstauchbiegung 22, welches im Prinzip eine kurze Ausführung mit einer Länge L2 des wandartigen Elements 21.1 darstellt. In Figur 2c ist ein Beispiel eines säulenartigen Abstandselements 21.9 dargestellt, welches beispielsweise aus zylinderförmig angeordnetem Streckmetall 23 gebildet ist. Diese können auch eine konische Form 21.11 aufweisen.

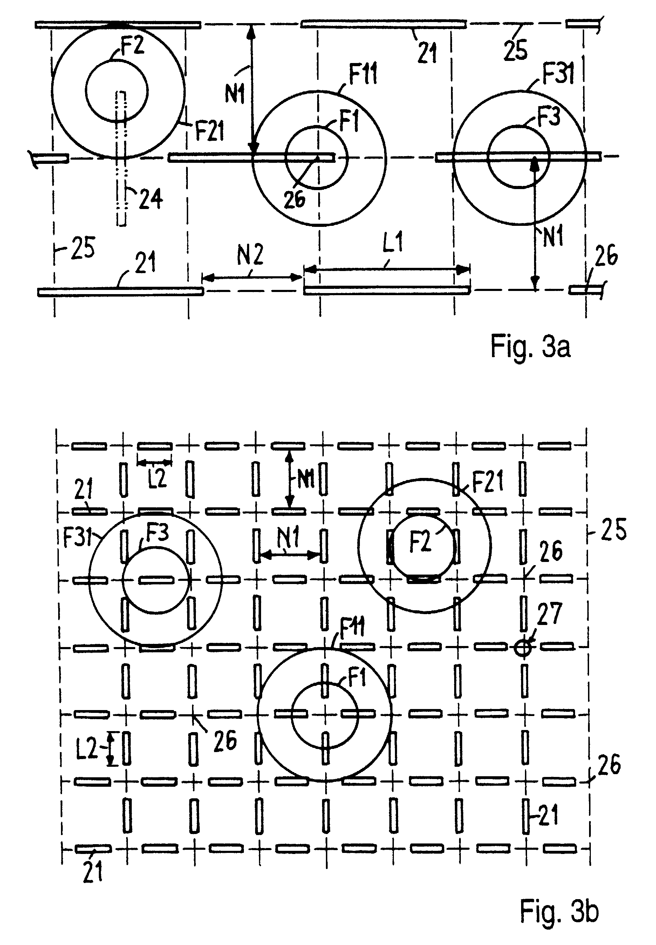

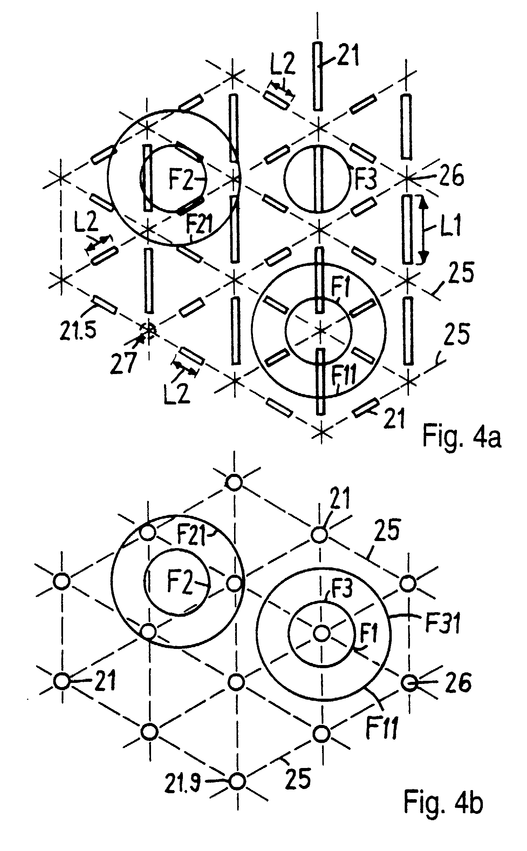

Die Figuren 3 und 4 zeigen Beispiele von Anordnungen der Abstandselemente 21, d.h. deren Verteilung über die Fläche des Wandelements 1. Die Abstandselemente werden dabei gleichmässig so über diese Fläche verteilt, dass ein möglichst gleichmässiger Deformationwiderstand über die ganze Fläche des Wandelements erreicht wird. d.h., dass an jedem Ort auch eine möglichst gleichmässige optimale Abbremsung eines aufprallenden menschlichen Körpers, und im speziellen bei einem Kopfaufprall, erzielt wird. Dazu werden die Abstandselemente hier in einem regelmässigen Netz- oder Gitterraster 25 mit Gitterpunkten 26 angeordnet. Figur 4 zeigt ein 60°-Gitter und Figur 3 ein Beispiel mit quadratischem Raster. Im Beispiel von Figur 3a sind relativ lange wandförmige Abstandselemente 21 in parallelen Reihen angeordnet. Der Abstand N1 zwischen den Reihen ist dabei grösser als der Abstand N2 zwischen den Abstandselementen in einer Reihe, und die Länge L1 der Abstandselemente ist grösser als N1. Dadurch wird auch hier bei relativ grossen Abständen N1 von z.B. 30 cm und mehr ein guter Kraftausgleich erreicht. Es sind drei verschiedene Stellen eines möglichen Kopfaufpralls durch Kreise dargestellt:

- Aufprall an einem Gitterpunkt 26 mit den Kreisen F1, F11,
- Aufprall im Zentrum einer Gittermasche mit den Kreisen F2, F21
- und in der Mitte eines Abstandselements 21 mit den Kreisen F3, F31.

Die Kreise F1, F2, F3 mit einem Durchmesser von 15 cm entsprechen der Berührungsfläche mit einem aufprallenden Kopf. Während die Kreise F11, F21, F31 mit einem Durchmesser von 30 cm das nähere Umfeld angeben. Der Krafteinfluss der in der Nähe liegenden Abstandselemente kann so abgeschätzt bzw. ermittelt werden. Je näher am Aufprallort ein Abstandselement liegt, desto grösser sein Beitrag zum gesamten Deformationswiderstand.

In Figur 3b ist eine quadratische Anordnung mit kleinerer Gitterkonstante N1 von z.B. 15 cm gezeigt, damit kann eine sehr gleichmässige Kraftverteilung der Abstandselemente 21 über die ganze Wandelementfläche erreicht werden. Die Abstandselemente sind hier in Längs- und Querreihen regelmässig angeordnet, wobei deren Länge L2 hier z.B. halb so gross ist wie die Gitterkonstante N1. Sehr wichtig ist, dass die Abstandselemente knotenfrei 27 angeordnet sind, d.h. dass zwischen den Abstandselementen immer ein Abstand eingehalten wird und dass nie längs- und querlaufende Abstandselemente in einem Gitterpunkt einen Knoten und damit einen hier stark erhöhten Deformationswiderstand bilden.

Figur 4 zeigt Anordnungsbeispiele mit 60° Gitterstruktur 25. In Figur 4a sind unterschiedlich grosse Abstandselemente 21 eingesetzt, wobei in einer Gitterrichtung Abstandselemente mit einer grösseren Länge L1 und in den andern beiden Richtungen Elemente mit kleinerer Länge L2 regelmässig angeordnet sind. Wie durch die Kreise der Aufprallflächen F1, F2, F3 und F11, F21 illustriert ist, kann auch so ein Ausgleich der Deformationskraftbeiträge der nächstliegenden Abstandselemente erreicht werden. Unabhängig vom Aufprallort wird damit ein im wesentlichen gleichgrosser Deformationswiderstand geschaffen. Im Beispiel von Figur 4b sind in den Gitterpunkten 26 säulenartige Abstandselemente 21.9, wie beispielsweise in Figur 2c gezeigt, angeordnet. Auch dies ist eine knotenfreie Anordnung, denn alle Abstandselemente sind hier gleichmässig voneinander beabstandet. Die Wahl der Anordnung der Abstandselemente richtet sich auch nach der Art der festen Unterlage 5 auf welche das Aufprall-Wandelement abgestützt ist. Ein Rahmen 45 gemäss Figur 14 erfordert sehr weite Abstände N1 zwischen den Elementen 21, während auf einer festen Wand, einem Boden oder einem Korpus auch enge Abstände N1 gewählt werden können (Fig. 3b), wobei z.B. N1 etwa gleich gross sein kann wie die Dicke D des Wandelements 1. Bei grossen Abständen N1 kann ein zusätzlicher Kraftausgleich durch an der Deckplatte 10 angebrachte Verstärkungsprofile 24 erreicht werden, wie in Figur 3a und 14 gezeigt ist.

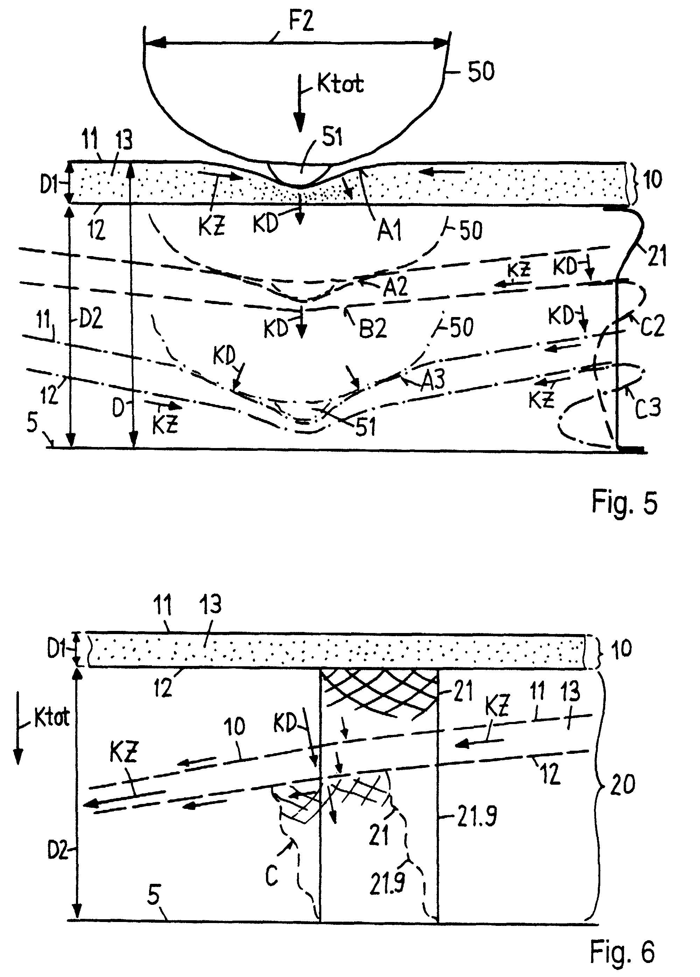

Im folgenden wird der Aufprall-Mechanismus und die Funktion der erfindungsgemässen Wandstruktur, d.h. die Funktion der einzelnen Strukturelemente, der Sandwich-Deckplatte 10 mit Deckschichten 11, 12 und Kern 13, der Abstandselemente 21, sowie deren Zusammenwirken anhand der Figuren 5 bis 9 erläutert. Die Deformationskräfte der verschiedenen Elemente der Aufprall-Wand sind bezüglich Verformungseigenschaften und örtlichem Auftreten der Deformationskräfte dem menschlichen Körper angepasst. Die Anpassung an die Form eines aufprallenden Körperteils wird durch die Deckplatte mit den beiden Deckschichten erzeugt. Dies wird gemäss Figur 5 am Beispiel eines Kopfaufpralls mit einer eng lokalisierten vorstehenden Stelle wie Nase oder Kinn erläutert. Die kleinflächig vorstehende exponierte Stelle, hier die Nase 51, berührt die obere Deckschicht und wird auf einem Deformationsweg von ca. 1 cm im wesentlichen vom Deformationswiderstand und lokalen Membrankräften der oberen Deckschicht 11 gebremst, dann von Druckkräften des Sandwichkerns 13 und anschliessend auch von Deformations- und Membrankräften der unteren Deckschicht 12 aufgefangen.

Die Kräfte der oberen Deckschicht sind mit A, diejenigen der unteren Deckschicht mit B und die Kräfte der Abstandselemente mit C bezeichnet. Zu Beginn des Aufpralls treten zuerst Kräfte A1 der oberen Deckschicht 11 auf, welche die erste Formanpassung an die Nase 51 ergeben. Anschliessend mit tieferem Eindringen treten zunehmend auch Kräfte B der unteren Deckschicht 12 auf. In der gezeichneten zweiten Deformationslage von Figur 5 sind dies die Kräfte B2 zusätzlich zu den Kräften A2 der oberen Deckschicht sowie die Kräfte C2. Mit weiterem Eindringen werden zunehmend auch Kräfte C der Abstandselemente 21 wirksam. In der gezeichneten dritten Deformationslage sind dies die Kräfte C3 zusätzlich zu den Kräften A3 und B3. Die Richtungen der Membrankräfte der Deckschichten 11 und 12 sind beispielsweise eingezeichnet mit KZ für die Zugkräfte und KD für die Druckkräfte. Die Aufprallfläche F2 des Kopfes 50 wird mit zunehmender Eindringtiefe wirksam, d.h. die Kontaktfläche wird grösser. Mit zunehmendem Deformationsweg und Berührungsfläche des Kopfs 50 mit der Deckplatte treten Stauch- und Biegekräfte der nächsten Abstandselemente sowie zunehmende Membrankräfte der Deckplatte auf. Mit fortschreitendem Deformationsweg werden weiterreichende Membrankräfte und Deformationskräfte weiterer benachbarter Abstandselemente wirksam.

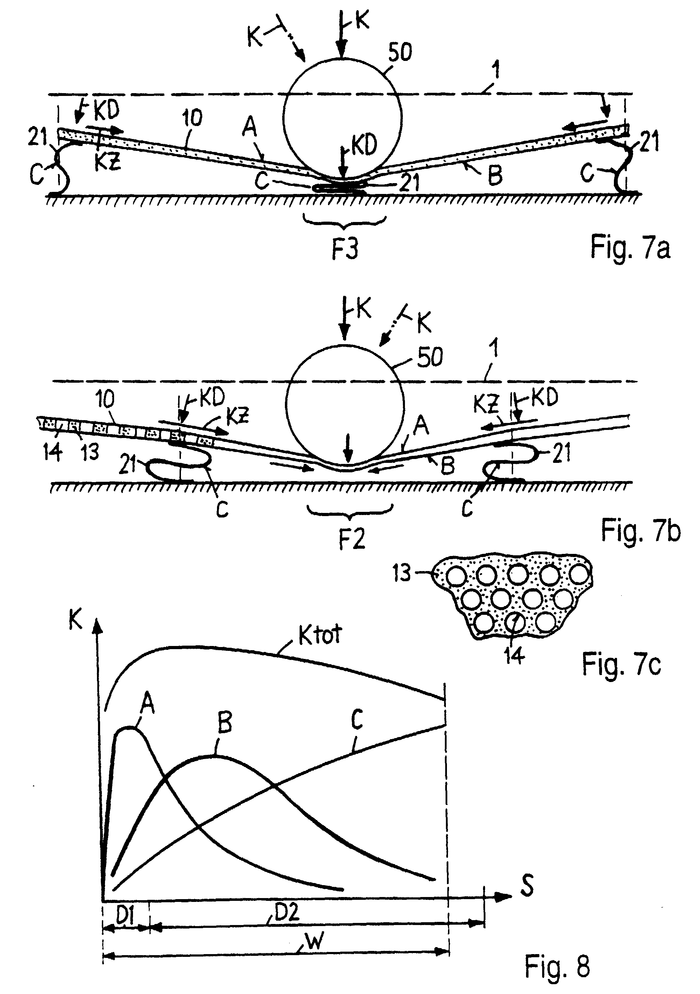

Dies ergibt einen mehrphasigen Deformationsverlauf mit Überlagerung der Kräfte A von oberer Deckschicht, B von unterer Deckschicht, bzw. der ganzen Sandwichplatte, und C von den Abstandselementen über den Deformationsweg W (siehe Figur 8).

Figur 6 illustriert die auf ein Abstandselement 21 ausgeübten und von diesen durch Verformungen absorbierten Kräfte Ktot bzw. Energien bei einem Aufprall, welcher hier nicht direkt auf ein Abstandselement erfolgt (siehe Fig. 7b). Durch die Sandwich-Deckplatte 10 werden Membrankräfte, d.h. Zugkräfte KZ und Druckkräfte KD, auf das Abstandselement 21 übertragen. Hier ist dies an einem säulenförmigen Abstandselement 21.9 dargestellt, welches durch die Kräfte C gestaucht und verbogen wird. Im Vergleich zur Ausgangslage wird die Sandwich-Deckschicht mit Kern 13 und einer Dicke D1 durch die Druckkräfte KD auch komprimiert bzw. gestaucht.

Das Zusammenwirken der Kräfte A, B, C der Sandwich-Deckschicht 10 und der Abstandselemente 21, sowie die resultierenden Deformationen, werden nach Figur 7a, b weiter illustriert Im Beispiel von Figur 7a erfolgt der Aufprall direkt auf ein Abstandselement 21, welches somit nach Stauchung der Deckplatte 10 und ihres Kerns 13 selber auch gestaucht wird durch die Druckkräfte KD. Im Beispiel von Figur 7b erfolgt der Aufprall zwischen zwei Abstandselemente 21. (Fig. 7a und 7b entsprechen den Beispielen mit Aufprallflächen F3 und F2 der Fig. 3, 4.) Hier übertragen die Membrankräfte der Deckschichten 11, 12 Aufprallkräfte auf die beiden benachbarten Abstandselemente 21. Grob gesagt, werden dabei diese beiden Abstandselemente je halb so stark gestaucht wie das eine zentrale Abstandselement von Fig. 7a. Der Deformationswiderstand ist in beiden Fällen von Fig. 7a und 7b etwa gleich gross.

Die erfindungsgemässe Aufprallwand ist in Aufbau, Materialwahl und Dimensionierung so ausgelegt, dass sie den erläuterten Funktionsmechanismen bestmöglich entspricht. Um geringe Massenträgheitskräfte bei hohen Aufprallgeschwindigkeiten zu erreichen, ist die ganze Struktur und vor allem die Deckplatte generell leicht gebaut. Als Materialien eignen sich zähe Leichtmetalle wie Aluminiumlegierungen, z.B. Ac 110, mit hoher spezifischer Deformationsenergieaufnahme, und auch Langfaser- oder Endlosfaser-Verbundwerkstoffe wie glas- und aramidfaserverstärkte Kunststoffe. Die Sandwich-Deckplatte 10 ist relativ weich und nicht biegesteif ausgebildet, so dass deren Deckschichten 11, 12 lokal leicht gegeneinander verschiebbar sind. (Die bekannten, sehr biegesteifen Standard-Wabenplatten, deren Waben sehr fest mit den Deckschichten verklebt sind, sind hier absolut ungeeignet.) Der Sandwichkern 13 selber und seine Verbindung mit den Deckschichten, z.B. durch schwache Klebung, ist so ausgelegt, dass erst über eine Fläche von mehreren $dm^2$ spürbare Schubkräfte von der oberen Deckschicht 11 auf die untere Deckschicht 12 übertragen werden. Damit kann die obere Deckschicht die ersten lokalen Deformationen quasi allein aufnehmen, unabhängig von der unteren Deckschicht. Der Sandwichkern der Deckplatte ist zudem lokal um mehr als 50 % stauchbar. Über Entfernungen von 1 dm und mehr überträgt jedoch der Sandwichkern Schubkräfte von der oberen Deckschicht auf die untere Deckschicht und damit deren Membrankräfte auch auf benachbarte Abstandselemente. Vereinfacht gesagt, bilden die Deckschichten ein lose gekoppeltes doppeltes Netz, welches die Kräfte auf die Abstandselemente überträgt und gleichzeitig eine lokale Anfangsdeformation relativ weich aufnimmt.

Die Abstandselemente sind so aufgebaut und angeordnet, dass sie gleichmässig deformierbar, d.h. stauchbar und biegbar sind.

Die Dicken der Deckschichten liegen vorzugsweise in einem Bereich unter 1 mm, z.B. 0.4 - 0.7 mm. Je nach gewünschtem Kraftverlauf A, B nach Fig. 8 können obere und untere Deckschicht auch bezüglich Dicke und Material unterschiedlich ausgebildet sein, z.B. 0.4 und 0.6 mm dick sein oder aus Aluminium und aus Aramidverbund bestehen.

Die Anordnung der Abstandselemente ist knotenfrei und gleichmässig verteilt, so dass die addierten Biege- und Stauchkräfte der benachbarten Abstandselemente für alle Aufprallstellen ungefähr gleich gross sind.

Die ganze Aufprall-Wandstruktur 1 ist an jedem Ort um über 80%, vorzugsweise um mindestens 90 % stauchbar.

Der leichte Sandwichkern 13 weist vorzugsweise einen Leervolumenanteil von mindestens 90% auf. Er kann aus Schaumstoffen oder z.B. auch aus feinen, vorgestauchten Röhrchenstrukturen bestehen. Der Kern kann auch Zwischenräume aufweisen, siebartig gelocht, gitterförmig oder streifenförmig ausgelegt sein, wie dies als Beispiel in den Figuren 7b und 7c an einem Schaumstoffkern mit Löchern 14 gezeigt ist. Vorzugsweise liegt seine Dichte im Bereich von 40 - 80 kg/m$^3$.

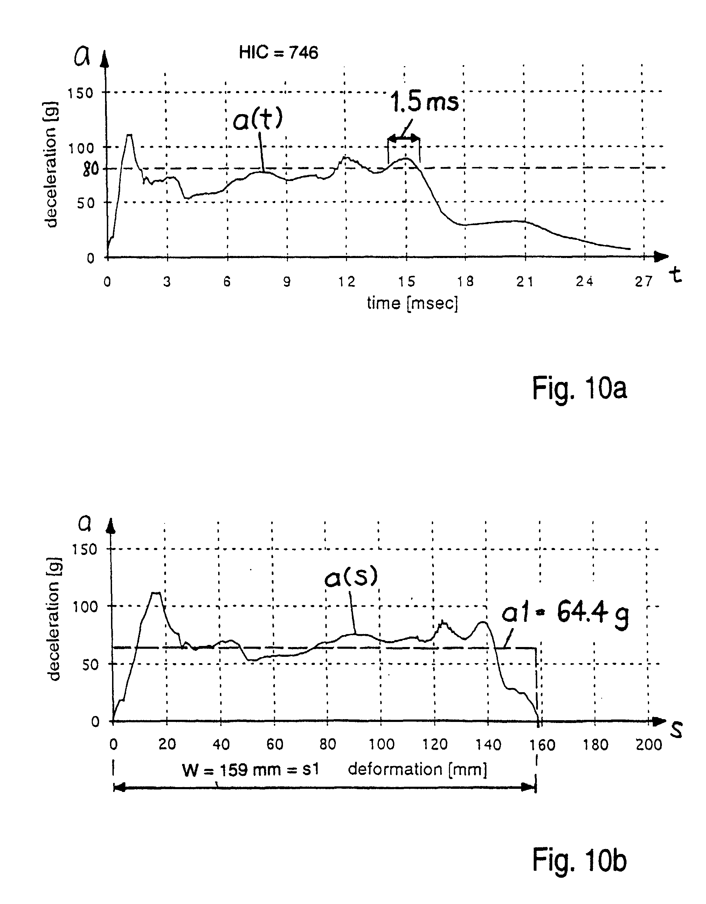

Das Zusammenwirken der Kräfte A, B, C von oberer Deckschicht, von unterer Deckschicht und von den Abstandselementen wird im Beispiel von Figur 8 illustriert, wo die Kräfte A, B, C sowie die daraus resultierende Aufprallkraft Ktot in Funktion des Deformationswegs s aufgetragen ist. Hier steigt die Kraft A der oberen Deckschicht 11 im Bereich der ersten Zone D1 rasch an und fällt anschliessend ab. Der Anstieg und Abfall der Kraft B der unteren Deckschicht 12 erfolgt wesentlich flacher, während die Kraft C der Abstandselemente 21 relativ kontinuierlich ansteigt. Die Höhe und Form der Kraftverläufe A und B sind durch Dimensionierung und Eigenschaften der Deckschichten 11 und 12 sowie durch die Festigkeit des Kerns 13 und dessen Verbindung mit den Deckschichten beeinflussbar und damit einstellbar. Die resultierende Kraft Ktot, welche auf den aufprallenden Körper einwirkt, wird vorzugsweise so ausgelegt, wie dies im folgenden anhand der Figuren 10 bis 12 erklärt ist.

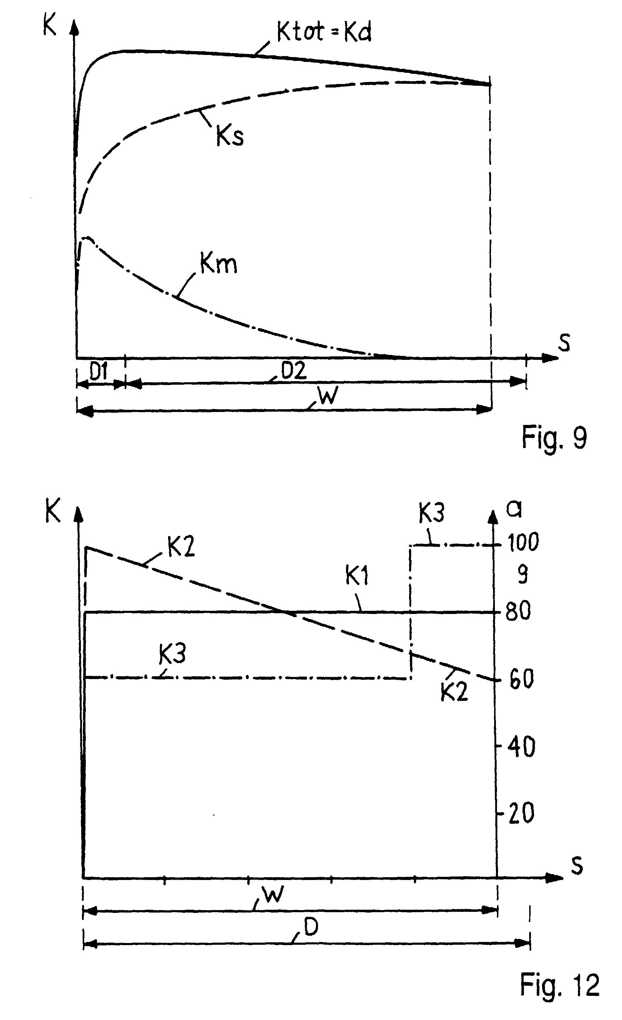

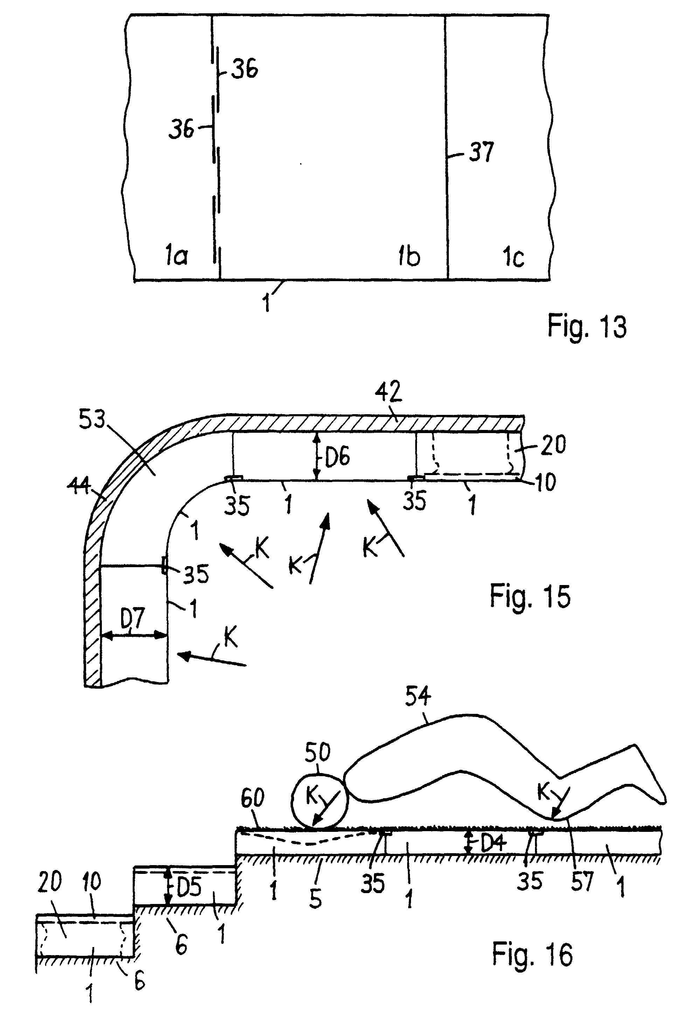

Figur 9 illustriert den Beitrag der Massenträgheitskräfte Km in Funktion des Deformationswegs s bei höheren Aufprallgeschwindigkeiten. Die Kraft Km erreicht zu Beginn des Aufpralls einen Spitzenwert entsprechend dem dann lokal stark beschleunigten Anteil der Deckplatte 10 im Bereich des Aufpralls. Anschliessend sinkt die Kraft Km rasch ab. Die rein statische Deformationskraft Ks erreicht ebenfalls anfangs rasch einen relativ hohen Wert, um anschliessend relativ flach zu verlaufen. Dieser Verlauf kann leicht ansteigend sein wie im gezeigten Beispiel von Figur 9, was zusammen mit der abfallenden Kraft Km einen günstigen Verlauf der totalen Deformationskraft Kd = Ktot ergibt. Im Falle von quasi statischen Anwendungen mit geringen Aufprallgeschwindigkeiten V, wie im Beispiel von Figur 16, wo die Trägheitskräfte Km vernachlässigbar klein sind, kann auch ein leicht fallender Verlauf von Ks = Ktot als Summe der Kräfte A, B, C eingestellt werden.

Figur 10 a, b zeigt gemessene Daten eines Aufpralltests mit einem Kopfdummy von 5 kg Masse auf eine Wand gemäss Figur 14 mit einer sehr hohen Aufprallgeschwindigkeit V von 51 km/h (= 14.2 m/s). Figur 10 a zeigt die gemessene Verzögerung a(t) in Funktion der Zeit t und Figur 10 b die Verzögerung a(s) in Funktion des Deformationswegs s; a ist in Einheiten von g = 9.81 m/s$^2$ angegeben. Die Messungen zeigen ein sehr gutes Verhalten der Aufprallwand:

Der Kopf wird gleichmässig auf kürzestmöglichem Weg zum Stillstand abgebremst. Der maximale Deformationsweg beträgt W = 159 mm nach Figur 10b. Der resultierende errechnete HIC Wert lag bei nur 746. Der Verzögerungsverlauf a(s) liegt recht gleichmässig im hier angestrebten Bereich von 70 - 80 g und gemäss Kurve a(t) traten nur drei kleine Verzögerungsspitzen mit a > 80 g und einer Dauer von 1 bis 1.5 ms auf.

Nach relativ strengen Kriterien gemäss Luftfahrtvorschriften sind bezüglich des Kopfaufpralls folgende Grenzbedingungen einzuhalten:

- ein HIC Wert (Head Injury Criterion) von max. 1000
- Verzögerungsspitzen mit a > 80 g während höchstens 3 ms.

Die gemessenen Werte der Aufprallwand liegen also deutlich unter diesen Grenzwerten.

Auch ein Rechnungsvergleich illustriert die sehr guten Testresultate der erfindungsgemässen Wand.

Für eine konstante Verzögerung a1 errechnet sich der HIC Wert nach:

$$HIC = V * a1^{1.5}/9.81$$

Daraus errechnet sich für einen HIC Wert von 746 eine konstante Verzögerung von a1 = 64.4 g und daraus

mit

$$s1 = V^2/2a$$

für den totalen Deformationsweg s1 = 159 mm.

Dieser berechnete minimale Deformationsweg s1 entspricht gerade dem effektiv gemessenen Deformationsweg W = 159 mm. Zum Vergleich ist dieser berechnete Verlauf a1 ebenfalls in die Figur 10b eingetragen. Wie man sieht, kommt der gemessene Verlauf a (s) dem berechneten Verlauf mit minimal möglichem Deformationsweg s1 und konstanter Verzögerung a1 bei gleichen HIC Werten sehr nahe. Für eine Aufprallgeschwindigkeit von 15 m/s und mit dem Grenzwert von HIC = 1000 ergibt sich nach gleicher Berechnung eine konstante Verzögerung von a1 = 75.3 g und ein minimaler Verzögerungsweg von s1 = 152 mm.

Diese Aufprallbedingungen wären also mit einem erfindungsgemässen Wandelement mit einer Dicke D von nur 16 bis 17 cm erreichbar, was recht nahe ans theoretische, durch die physikalischen Grenzen gegebene Optimum heranreicht.

Das Verblüffendste an der vorliegenden Erfindung liegt wohl darin, dass mit diesem neuen, relativ einfachen, kostengünstigen, aber genau aufeinander abgestimmten Zweizonen-Aufbau derart hohe Leistungen erreicht werden können, welche jene von aufwendigen und nur beschränkt einstellbaren Airbagsystemen sogar noch übertreffen.

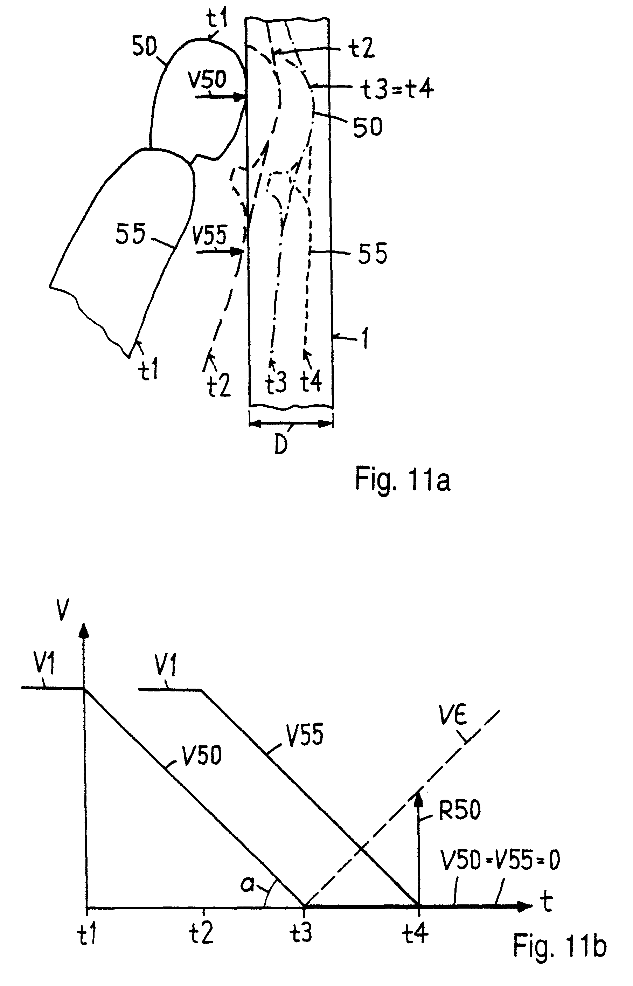

Figur 11 illustriert die Wirksamkeit der erfindungsgemässen Aufprallwand 1 bzw. ihrer nichtelastischen Auffangwirkung weiter. In Figur 11a ist schematisch der nicht gleichzeitige Aufprall zweier Körperteile, d.h. von Kopf 50 und Brust 55, auf das Wandelement 1 dargestellt. Figur 11b zeigt den zeitlichen Verlauf der Geschwindigkeit V(t) während des Aufpralls.

Zum Zeitpunkt t1 berührt der Kopf 50 mit der Geschwindigkeit V1 die Wand und wird anschliessend mit einer konstanten Verzögerung a gebremst.

Zum Zeitpunkt t2 trifft auch die Brust 55 mit der Geschwindigkeit V1 auf die Wand auf, wenn der Kopf schon in die Wand eingedrungen ist.

Zum Zeitpunkt t3 ist der Kopf 50 zum Stillstand abgebremst (V50 = 0) und hat seinen maximalen Deformationsweg zurückgelegt (Kurve t3 in Fig. 11a). Die Brust ist jedoch erst zur Hälfte abgebremst (V55>0).

Erst im Zeitpunkt t4 ist auch die Brust 55 bis zum Stillstand abgebremst (V55 = 0).

Beide Körperteile 50 und 55 bleiben nun mindestens für kurze Zeit in dieser Deformations-Endlage (Kurve t4 in Fig. 11a). Die Geschwindigkeiten V50 und V55 bleiben also = 0.

Bei rein elastischem Stossverhalten der Wand würde der Kopf gemäss der Geraden VE in Fig. 11b zurückgeschleudert, so dass er zum Zeitpunkt t4, wenn die Brust zum Stillstand gekommen ist, schon eine Rückschlaggeschwindigkeit R50 erreicht hätte. Dies würde das Genick mit entsprechend hohen Kräften zusätzlich sehr ungünstig belasten. Die erfindungsgemässe Aufprallwand ist jedoch so aufgebaut, dass die Deformationen mindestens vorübergehend, d.h. während mehr als der gesamten Aufpralldauer, länger als z.B. 0.1 s, praktisch vollständig erhalten und auch über eine Zeit von Minuten zu einem grossen Teil erhalten bleiben.

Ein aufprallender menschlicher Körper wird also nicht elastisch zurückgeschleudert, und dadurch nicht weiteren Verletzungsgefahren ausgesetzt. Ebenso wird auch vermieden, dass nicht gleichzeitig auftreffende Körperteile relativ zueinander noch zusätzlichen starken unterschiedlichen Beschleunigungen und damit zusätzlichen elastischen Kräften ausgesetzt werden.

Figur 12 zeigt schematisch Beispiele möglicher Kraftverläufe K(s) über den Deformationsweg s von Aufprall-Wandelementen. W ist der maximale Deformationsweg einer Wand mit einer Dicke D. Bei einer gegebenen Masse M eines Körperteils, z.B. des Kopfes, ist die Kraft K proportional zur Verzögerung a.

$$K = M * a$$

Bei konstanter Verzögerung a über den Deformationsweg W ist die von der Wand aufgenommene Stossenergie

$$E = K * s = M * a * W$$

Figur 12 zeigt drei Kraftverläufe K1, K2, K3 (s) über den maximalen Deformationsweg W.

K1 verläuft über den ganzen Deformationsbereich mit einer konstanten Verzögerung von 80 g. Dies ergibt bei einer maximal zulässigen Verzögerung von diesen 80 g eine maximal mögliche Energieabsorbtion von E = 80 Einheiten.

Bei K2(s) verläuft die Verzögerung a linear sinkend von anfangs 100 g auf 60 g am Ende des Deformationswegs W. Die Energieabsorption beträgt dann ebenfalls E2 = 80 Einheiten.

Bei K3(s) werden die ersten 80% des Wegs mit einer Verzögerung von a = 60 g und die restlichen 20% mit 100 g zurückgelegt. Dies ergibt eine Energieaufnahme von E3 = 68 Einheiten.

Der Verlauf K2(s) kann für hohe Kopfaufprallgeschwindigkeiten besonders vorteilhaft sein, da er einen tieferen HIC Wert ergibt als bei konstanter Verzögerung über den gleichen Deformationsweg W gemäss K1. Dies, weil anfangs bei höherer Geschwindigkeit eine lokale Verzögerungsspitze (in der Wandstruktur) rascher durchlaufen wird als später tiefer in der Wand und mit entsprechend niedrigerer Geschwindigkeit (gemäss dt = ds / V).

Die Auslegung der Wand gemäss K3 hat eine etwas niedrigere Energieabsoption als bei K1 und K2, dies könnte z.B. folgenden Vorgaben entsprechen:

Aufprallstösse sind relativ sanft abzufangen bis zu einer Aufprallenergie von 48 Einheiten (= 80% * 60 g). Zusätzlich ist aber noch eine Reserve von zusätzlich 20 Energieeinheiten für sehr unwahrscheinliche Fälle eines Aufpralls mit entsprechend höherer Energie vorzusehen. Die letzten 20% des Deformationswegs W mit der Beschleunigung a = 100 g wirken so als Notreserve. Dies kann baulich realisiert werden mit einem Aufprall-Wandelement, bei dem die 1. und 2. Zone (10 und 20) diesen 80% des Deformationswegs entsprechen und wo zusätzlich eine dritte, härtere Zone eingefügt ist zwischen die zweite Zone und die feste Unterlage 5 mit den restlichen 20% des Deformationswegs (vergleiche Figur 1).

Die hohe Wirksamkeit der erfindungsgemässen Wandstruktur wird an einem weiteren Beispiel eines sehr dünnen Aufprall-Wandelements erläutert. Ein Wandelement mit einer Dicke D von nur 3 cm und einem entsprechenden Deformationsbereich W von mindestens 2.5 cm erzielt folgende Aufprallresultate: Mit einer Auslegung auf eine konstante Verzögerung von a = 100 g kann schon eine Aufprallgeschwindigkeit V von ca. 7 m/s abgefangen werden und dies mit einem geringen Verletzungsrisiko entsprechend einem HIC Wert von 700. Dieses sehr gute Resultat ist zu vergleichen mit einem ungedämpften harten Kopfaufprall, welcher schon ab V = 5 m/s schwerste Verletzungen ergeben kann.

Zur Auslegung einer Aufprallwand auf eine gegebene Aufgabe kann folgendermassen vorgegangen werden:

1. Bestimmung der Randbedingungen
Dies sind vor allem die maximale Aufprallgeschwindigkeit V1, der zur Verfügung stehende Platz für die Schichtdicke D sowie die Art der aufzufangenden Körper, d.h. Körperteile, deren Masse sowie Form und Grösse der Aufprallflächen und die zulässigen Kräfte und Verzögerungen. Aus verschiedenen Anwendungsbereichen wie in der Luftfahrt und aus Crashversuchen der Automobilindustrie sind dazu Normen und Grenzwerte ausgearbeitet worden. Diese geben Messnormen und Grenzwerte der zulässigen Kräfte und Beschleunigungen für verschiedene Körperteile und verschiedene Stufen von Verletzungsrisiken an.

2. Aus diesen Randbedingungen bezüglich Kräften, Aufprallflächen, Massen und zulässigen Verzögerungen wird die Wand zuerst auf eine konstante Soll-Verzögerung a entsprechend der Kurve K1 von Fig. 12 ausgelegt.

3. Ausgehend von dieser konstanten Soll-Verzögerung a kann nach den weiteren Randbedingungen der Kraftverlauf wie in den Beispielen K2 und K3 von Figur 12 sowie gemäss Figur 8 gezeigt weiter optimiert werden. Dabei werden auch die Dicken D1 und D2 der beiden Zonen 10 und 20 optimiert, um einen grösstmöglichen maximalen Deformationsweg mit einer gegebenen Gesamtdicke D zu erreichen.

Beispielsweise wie folgt:

Zone 10 mit D1 = 15 mm, W1 = 10 mm

Zone 20 mit D2 = 85 mm, W2 = 80 mm, dies gibt bei einer Gesamtdicke mit D = 100 mm einen sehr grossen Deformationsweg W von 90 mm.

4. Nach Auslegung der Wand gemäss Abschätzungsrechnungen ist das statische Deformationsverhalten Ks durch relativ einfache Tests messbar. Damit wird vor allem die Gleichmässigkeit des Deformationsverlaufs über die Wandfläche, wie in Fig. 3 und 4 erläutert, bestimmt und optimiert. Für höhere Aufprallgeschwindigkeiten ist zusätzlich der Einfluss der Massenträgheitskräfte Km zu bestimmen. Dies kann wiederum zuerst mit groben Abschätzungsrechnungen erfolgen und anschliessend mit einem dynamischen Test verifiziert werden (Fig. 10). Ausgehend von diesen Messdaten kann die weitere Optimierung der Wand in iterativen Schritten mit Berechnungen und den einfachen statischen Messungen erfolgen.

Wie das Beispiel von Figur 10 zeigt, ist mit der erfindungsgemässen Aufprall-Wand mit relativ einfacher und kostengünstiger Struktur schon eine sehr hohe Schutzwirkung in weiten Anwendungsbereichen zu erreichen, welche den physikalischen Grenzen schon sehr nahe kommen. Demgegenüber sind bekannte aufwendige Systeme, wie der Airbag, nur sehr beschränkt einsetzbar, und sie erfordern überdies grössere Aufprallwege. Einfachere Systeme wie beispielsweise in Form von Schaumstoffpolstern ergeben einen wesentlich schlechteren Kraftverlauf mit entsprechend viel höheren Belastungswerten für den menschlichen Körper.

Figur 13 illustriert die Unterteilung eines grossen Wandelements in Sektoren 1a, 1b, 1c. Bei grossen Wandflächen, welche sich über mehr als z.B. 1 m ausdehnen, kann durch eine Unterteilung in Sektoren, mittels Unterbrechungen im Abstand von z.B. 50 bis 80 cm, eine gleichmässige Deformationscharakteristik über beliebig grosse Flächen erreicht werden. Eine vor einer Sitzreihe angebrachte Trennwand kann beispielsweise für jeden Sitz einen Sektor 1a, 1b, 1c aufweisen. Diese Wandunterteilung kann z.B. durch versetzte Schlitze 36 in einer oder in beiden Deckplatten 11, 12 oder durch Unterbrechung, d.h. Durchtrennung 37 der unteren, der oberen oder beider Deckschichten der Deckplatte gebildet werden. Dies verhindert das Auftreten zu grosser Membrankräfte im Inneren von grossen Flächen. Durch das Ausmass der Unterteilung kann die Membrankraft-Übertragung von einem Sektor auf den nächsten von 0 bis 100% beliebig eingestellt werden. Die Anordnung der Abstandselemente 21 und deren Abstände untereinander wird dann entsprechend angepasst. Beispiele von Anordnungen mit mehreren einzelnen Wandelementen 1 zeigen die Figuren 15 und 16.

Figur 14 zeigt ein Ausführungsbeispiel in Form einer Fahrzeug- oder Flugzeugtrennwand 40. Die Trennwand 40 mit oben an der Decke 42 und unten am Boden 41 des Fahrzeugs fixiertem, steifem Rahmen aus Aluminiumprofilen 45 ist in Richtung 43 verstellbar. Sie besteht aus zwei Wandelementen 1, welche auf den Rahmen 45 abgestützt sind. Die Abstandselemente 21 sind dabei an den Rahmenprofilen 45 befestigt, welche relativ weit auseinanderliegen, so dass ein entsprechend grosser Abstand N1 zwischen den Abstandselementen 21 besteht. Um dennoch über die ganze Fläche der Wand eine gleichmässige Deformationscharakteristik zu erreichen, sind zwischen den Abstandselementen in netzartiger Anordnung zusätzliche Versteifungsprofile 24 an der Deckplatte angebracht. Diese Versteifungsprofile 24 nehmen einerseits selber Deformationsenergie auf, andererseits übertragen sie auch Stosskräfte auf die Abstandselemente 21. Sie bestehen z.B. aus 0.5 mm starken, U-förmigen Aluminiumprofilen. Das obere Wandelement 1 der Trennwand weist hier eine grössere Dicke D6 von z.B. 13 bis 16 cm, während die geringere Dicke D7 des unteren Wandelements z.B. 10 bis 12 cm beträgt. Dies entspricht den unterschiedlichen Anforderungen bezüglich Aufprallverhalten der beiden Wandelemente. So ist die obere Aufprallwand in erster Linie zum Abfangen der empfindlichen Körperteile, vor allem des Kopfs 50, aber auch des Oberkörpers 55 ausgelegt, während das untere Wandelement 1 z.B. auf den weniger empfindlichen Beinbereich 57 oder auch je nach Umständen auf geringere Aufprallgeschwindigkeiten und Belastungen ausgelegt ist. In der abgewinkelten Stellung 47 ist die Trennwand vor Sitzen 46 mit Passagieren 58, welche mit einem Beckengurt gesichert sind, angebracht. Bei einem heftigen Aufprall, z.B. einer Notlandung wird dann deren Kopf 50 in Richtung 49 bis zum Aufschlag auf das obere Wandelement 1 geschleudert. In einer anderen Anwendung der Trennwand in senkrechter Stellung 48 kann der Aufprall auch eines stehenden Passagiers 59 bestmöglich abgefangen werden. Eine optimale Auffangwirkung wird auch bei nicht senkrechtem Aufprall erreicht (Fig. 7).

Die Trennwand 40 ist in einer Frontansicht (Fig. 14a) und in einer Seitenansicht (Fig. 14b) dargestellt.

Figur 15 zeigt eine weitere Anwendung der erfindungsgemässen Aufprall-Wandelemente als stossaufnehmende Auskleidung von exponierten Stellen in einem Fahrzeuginnenraum. Damit können auch seitliche Stösse (z.B. bei Seitenzusammenstoss) oder Stösse relativ zum Fahrzeugdach (z.B. bei Überschlag) aufgefangen werden. Dies wird hier in einer Teilansicht mit drei verschiedenen Wandelementen 1 illustriert: Auf die Fahrzeugseitenwand 44 ist ein Wandelement mit einer Dicke D7 abgestützt, während am Dach 42 ein Wandelement mit geringer Dicke D6 (entsprechend tieferen Anforderungen) angebracht ist. Den Übergang zwischen diesen beiden Wandelementen bildet ein drittes Element 53, welches entsprechend gebogen ist. Dies stellt ein Beispiel einer schalenförmigen oder gewölbten Ausführung des erfindungsgemässen Wandelements 1 dar. Je nach Anforderungen können die Schichtdicken beispielsweise wie folgt ausgelegt sein: D6 = 4- 8 cm, D7 = 6 - 10 cm.

Die Wandelemente sind z.B. durch Verbindungselemente 35 mit relativ geringer, dosierbarer Kraftübertragung untereinander verbunden.

Die erfindungsgemässen Aufprall-Wandelemente können in vielen Gebieten eingesetzt werden. Diese reichen vom Transportbereich mit Flugzeugen und Landfahrzeugen bis hin zu stationären Anwendungen in Immobilien.

Im Transportbereich besteht ein zunehmender Bedarf an besserem Insassenschutz in Fahrzeugen generell. Hier besteht neben den beiden heute üblichen Systemen

Schaumstoffpolsterungen und Airbag ein weiter Anwendungsbereich.

Auf der kostengünstigen Seite für geringe Anforderungen sind Kunststoffschaum-Polsterungen im Innenraum heute sehr weit verbreitet.

Für hohe Anforderungen werden zunehmend Airbag Systeme bald auch schon für den Seitenschutz eingesetzt. Diese sind jedoch sehr teuer und auch nur beschränkt einsetzbar, bedingt durch ihre aufwendige Aktivierung und Auslösungssteuerung. Dazwischen können die neuen Aufprall-Elemente mit relativ geringem Aufwand und sehr hoher Leistungsfähigkeit einen viel weiteren Einsatzbereich abdecken. Die Wandelemente sind generell einsetzbar an exponierten Stellen in vertikaler, horizontaler oder geneigter Lage sowie in flacher oder gewölbter Ausführung zum Schutze von angegurteten und nicht gesicherten Passagieren in Fahrzeugen, wie dies bei hohen positiven oder negativen Beschleunigungen in Fahrtrichtung (Stösse auf Front oder Heck des Fahrzeugs) oder seitlich, z.B. bei Überschlag oder seitlichem Aufprall des Fahrzeugs, auftreten kann.

Die Anwendungen umfassen bei Luftfahrzeugen und Landfahrzeugen im Innenraum Querwände (Front-, Heckseite und Unterteilungen), Seitenwände, Auflagen auf Einbauten, Kasten, Dachhimmel. Dabei können die Wandelemente in Passagierfahrzeugen wie Flugzeugen, Reisebussen, Bahnen, Schienenfahrzeugen etc. wie auch in Individualfahrzeugen, im speziellen z.B. in Wohnmobilen, Combiwagen, Caravan, Camper, wo ein Aufprallschutz für nicht angegurtete Passagiere noch sehr wenig angewendet wird, eingesetzt werden.

Anwendungen in stationären Anlagen in Immobilien werden benötigt, wo die Gefahr besteht, dass Personen auf feste Objekte aufschlagen können, z.B. in Spitälern, Pflegeheimen, Alterswohnungen. Die Wandelemente sind hier einsetzbar als falldämpfende Böden und Treppenstufen oder bei Seitenwänden in geschützten Zimmern von psychiatrischen Anstalten.

Die quantitativen Anforderungen für verschiedene Anwendungen können sehr unterschiedlich sein. Im Transportbereich werden die Wandelemente auf hohe Verzögerungswerte, z.B. 80 g und relativ hohe Geschwindigkeiten bis 15 m/sec. ausgelegt, während im stationären Bereich nur geringere Geschwindigkeiten von z.B. 5 bis 8 m/sec. und auch geringere Verzögerungswerte von z.B. 30 - 50 g zu bewältigen sind. Die generellen Eigenschaften der neuen Wandelemente eignen sich jedoch für alle Anwendungen, deren besondere Vorzüge sind:

- definierte hohe Anfangskraft der Verformung,
- gleichmässige und definiert hohe Deformationskraft (bzw. Verzögerung) im Deformationsbereich,
- ein maximal grosser Verformungsweg W bezogen auf die Dicke D des Wandelements,
- weitgehend plastische Verformung, d.h. kurzfristig bleibende Verformung während eines Aufpralls und kein Zurückschlagen des Körpers,
- gute Anpassung der Aufprallfläche an die Form des Körpers.

Eine Anwendung in stationären Anlagen ist mit dem Beispiel falldämpfender Bodenbelag gemäss Figur 16 dargelegt. Besonders für ältere Personen stellen Verletzungen infolge von Stürzen auf den Boden eine sehr wesentliche Gefahr dar, dies einerseits bedingt durch unsicheres Gehen und mögliche Schwächeanfälle und andererseits durch die schwächere Körperverfassung und brüchigere Knochen, wodurch sich bei einem Sturz höhere Verletzungsfolgen ergeben. Dementsprechend haben ältere Personen auch Angst vor Stürzen und den entsprechenden Verletzungsfolgen. Überdies ist ein erhöhter personeller Betreuungsaufwand für deren Pflege erforderlich oder eine verfrühte Übersiedlung in Pflegeheime. Der falldämpfende Bodenbelag nach Figur 16 ergibt nun eine gute Lösung dieser Probleme. Er besteht aus einzelnen Wandelement-Platten 1, welche mit Verbindungselementen 35 so verbunden sind, dass nur eine geringe Übertragung von Membrankräften einer Platte auf die nächste stattfindet. Die Wandelement-Platten auf dem flachen Boden 5 weisen eine geringere Dicke D4 auf als die auf Treppenstufen 6 verlegten Platten mit einer Dicke D5. Der Aufprall bei einem Sturz, z.B. auf den Kopf 50 und auf die Knie 57 infolge Stolperns einer Person 54, ist mit den resultierenden, hier nicht vertikalen Aufschlagkräften K angezeigt. Ein falldämpfender Boden in Form von bekannten Elastomer-Platten ergibt bei Belastung immer ein gewisses Einsinken. Dies erschwert das Begehen und ergibt ein unsicheres Gefühl. Die erfindungsgemässen Wandelemente als Bodenplatten sind dagegen so ausgelegt, dass sie begehbar sind ohne spürbares Einsinken, d.h. die statische Anfangsdeformationskraft ist genau auf diese Aufgabe ausgelegt. Im Falle eines Sturzes und dadurch verursachter bleibender Deformation können diese Platten jedoch leicht ausgewechselt werden. Aus der möglichen Fallhöhe des Kopfs auf ebenen Boden und auf Treppen ergeben sich Werte für die möglichen Aufprallgeschwindigkeiten von etwa 5 bis 8 m/s. Daraus wird der resultierende erforderliche Deformationsweg W abgeleitet. Bei konstanter Verzögerung a von 30 bis 50 g beträgt $W = V^2 / 2a$. Daraus ergeben sich Deformationswege von W = 4 bis 10 cm. Bezogen auf eine Kopfmasse von 5 kg ergeben sich bei einer Verzögerung von a = 40 g Anfangsdeformationskräfte von 2000 N und bezogen auf 1 dm² Aufprallfläche ergibt dies eine Flächenbelastung von 20 N/cm². D.h. als maximale Belastung für das Begehen wäre dann auf 1 dm² Auflagefläche (flache, breite Schuhsohle) eine Masse von entsprechend maximal 200 kg ohne Deformation des Bodenelements zulässig. Eine leichte Teppichauflage 60 auf das Bodenelement kann zusätzliche Verbesserungen ergeben.

Wie erläutert, lässt sich ein falldämpfender Boden aus den erfindungsgemässen Wandelementen optimal auf eine gewünschte Anwendung und sogar auf eine bestimmte Person auslegen. Dank geringem Gewicht und einfacher Bauweise stellt dies nicht nur eine sehr leistungsfähige, sondern auch noch eine kostengünstige Lösung der Probleme dar.

**Patentansprüche**

1. Aufprall-Wandelement (1) zum schonenden Abbremsen eines auf ein Hindernis aufprallenden menschlichen Körpers, insbesondere des Kopfaufpralls in Fahrzeugen oder Flugzeugen, welches mindestens zwei Zonen (10, 20) aufweist und wobei die Dicke (D2) der zweiten Zone (20) mindestens das Doppelte der Dicke (D1) der ersten Zone (10) beträgt, wobei die erste Zone aus einer leichten, plastisch deformierbaren Deckplatte (10) mit einer dünnen oberen Deckschicht (11), einer dünnen unteren Deckschicht (12) und einem dazwischen angeordneten leichten, Hohlräume aufweisenden, deformierbaren Stützkern (13) besteht und wobei die zweite Zone (20) plastisch deformierbare Elemente (21) aufweist, welche mit der unteren Deckschicht (12) verbunden und auf eine feste Unterlage (5) abgestützt sind, dadurch gekennzeichnet, dass

   - die Deckplatte der ersten Zone (10) eine Sandwich-Deckplatte (10) ist und dass
   - die Elemente der zweiten Zone (20) einzelne, diskrete, voneinander beabstandete Abstandselemente (21) sind, welche die Deckplatte tragen.

2. Wandelement nach Anspruch 1, dadurch gekennzeichnet, dass die Dicke D2 der zweiten Zone das 3- bis 10fache der Dicke D1 der ersten Zone beträgt.

3. Wandelement nach Anspruch 1, dadurch gekennzeichnet, dass das Gewicht der Deckplatte zwischen 2 und 3.5 kg/m² liegt.

4. Wandelement nach Anspruch 1, dadurch gekennzeichnet, dass die Dicke D1 der Deckplatte (10) zwischen 8 und 20 mm liegt.

**5.** Wandelement nach Anspruch 1, dadurch gekennzeichnet, dass die Deckschichten (11, 12) aus Aluminium bestehen.

**6.** Wandelement nach Anspruch 1, dadurch gekennzeichnet, dass die Deckschichten (11, 12) eine Dikke von 0.4 bis 0.6 mm aufweisen.

**7.** Wandelement nach Anspruch 1, dadurch gekennzeichnet, dass der Stützkern (13) aus einem Schaumstoff aufgebaut ist.

**8.** Wandelement nach Anspruch 1, dadurch gekennzeichnet, dass der Stützkern (13) eine spezifische Dichte von 40 bis 80 kg/m$^3$ aufweist

**9.** Wandelement nach Anspruch 1, dadurch gekennzeichnet, dass die zweite Zone (20) zusätzliche kräfteverteilende Versteifungsprofile (24) aufweist, welche an der Deckplatte (10) angebracht sind.

**10.** Wandelement nach Anspruch 9, dadurch gekennzeichnet, dass die Anordnung der Abstandselemente (21) und allfälliger Versteifungsprofile (24) in der zweiten Zone eine knotenfreie netzartige Struktur (25) bildet.

**11.** Wandelement nach Anspruch 1, dadurch gekennzeichnet, dass die Abstandselemente eine Vorstauchbiegung (22) aufweisen.

**12.** Wandelement nach Anspruch 1, dadurch gekennzeichnet, dass die Abstandselemente (21) aus im wesentlichen senkrecht zur Deckplatte stehenden Wandprofilen (21.1) bestehen.

**13.** Wandelement nach Anspruch 1, dadurch gekennzeichnet, dass die Abstandselemente (21) blattartig (21.5), bogenförmig (21.6), röhrenförmig (21.8) oder säulenförmig (21.9), zylindrisch oder konisch (21.11) ausgebildet sind.

**14.** Wandelement nach Anspruch 1, dadurch gekennzeichnet, dass die Abstandselemente aus 1 - 2mm starkem Aluminiumblech bestehen.

**15.** Wandelement nach Anspruch 1, dadurch gekennzeichnet, dass die Deckschichten (11, 12) und/oder die Abstandselemente (21) aus faserverstärktem Kunststoff bestehen.

**16.** Wandelement nach Anspruch 1, dadurch gekennzeichnet, dass die Dicke D2 der zweiten Zone 5 - 18 cm beträgt.

**17.** Wandelement nach Anspruch 1, dadurch gekennzeichnet, dass die zweite Zone ein Gewicht von 1 bis 3 kg/m$^2$ aufweist.

**18.** Wandelement nach Anspruch 1, dadurch gekennzeichnet, dass der nutzbare Deformationsweg W mindestens 90% der Dicke D des Wandelements beträgt.

**19.** Wandelement nach Anspruch 1, dadurch gekennzeichnet, dass der dynamische Deformationswiderstand des Wandelements für eine kugelförmige Druckfläche mit einem Durchmesser von 15 cm zwischen 2 und 4 kN liegt.

**20.** Wandelement nach Anspruch 1, dadurch gekennzeichnet, dass der dynamische Deformationswiderstand über den nutzbaren Deformationsbereich W einen im wesentlichen konstanten Wert aufweist, mit tendenziell höheren Werten am Anfang.

**21.** Wandelement nach Anspruch 1, dadurch gekennzeichnet, dass das Wandelement in mindestens zwei Sektoren (1a, 1b, 1c) unterteilt ist, wobei die Unterteilung durch mindestens teilweise Durchtrennung (36, 37) der Deckplatte (10) gebildet ist.

**22.** Trennwand (40) vor Passagiersitzen in Fahrzeugen oder Flugzeugen, gekennzeichnet durch mindestens ein Wandelement (1) nach einem der vorangehenden Ansprüche und durch einen beidseitig fixierten Rahmen (45) als feste Unterlage (5).

**23.** Bodenbelag in stationären Anlagen, gekennzeichnet durch mehrere auf einem Boden ausgelegte Wandelemente (1) nach einem der Ansprüche 1 bis 21.

**Claims**

**1.** Impact wall element (1) for the gentle deceleration of a human body impacting with an obstacle, particularly a head impact in motor vehicles or aircrafts, which has a structure with at least two zones (10, 20) and in which the thickness (D2) of the second zone (20) is at least twice the thickness (D1) of the first zone (10), the first zone being formed from a lightweight, plastically deformable cover plate (10) with a thin upper cover layer (11) and a thin lower cover layer (12) and an intermediate lightweight, deformable support core (13) having cavities and in which the second zone (20) has plastically deformable elements (21), which are connected with the lower cover layer (12) and are supported on a fixed substrate (5), characterized in that

- the cover plate of the first zone (10) is a sandwich cover plate (10) and
- that the elements of the second zone (20) are separate, discreet spacing elements (21), which are spaced from each other and which carry the cover plate.

2. Wall element according to claim 1, characterized in that the thickness D2 of the second zone is 3 to 10 times the thickness D1 of the first zone.

3. Wall element according to claim 1, characterized in that the weight of the cover plate is between 2 and 3.5 kg/m$^2$.

4. Wall element according to claim 1, characterized in that the thickness D1 of the cover plate (10) is between 8 and 20 mm.

5. Wall element according to claim 1, characterized in that the cover layers (11, 12) are made from aluminium.

6. Wall element according to claim 1, characterized in that the cover layers (11, 12) have a thickness of 0.4 to 0.6 mm.

7. Wall element according to claim 1, characterized in that the support core (13) is made from a foam material.

8. Wall element according to claim 1, characterized in that the support core (13) has a specific density of 40 to 80 kg/m$^3$.

9. Wall element according to claim 1, characterized in that the second zone (20) has additional force-distributing stiffening sections (24), which are fitted to the cover plate (10).

10. Wall element according to claim 9, characterized in that the arrangement of the spacing elements (21) and any stiffening sections (24) in the second zone forms a junction-free, netting-like structure (25).

11. Wall element according to claim 1, characterized in that the spacing elements have a precompression bend (22).

12. Wall element according to claim 1, characterized in that the spacing elements (21) comprise wall sections (21.1) substantially perpendicular to the cover plate.

13. Wall element according to claim 1, characterized in that the spacing elements (21) are sheet-like (21.5), arcuate (21.6), tubular (21.8), columnar (21.9), cylindrical or conical (21.11).

14. Wall element according to claim 1, characterized in that the spacing elements are made from 1 to 2 mm thick aluminium sheet material.

15. Wall element according to claim 1, characterized in that the cover layers (11, 12) and/or spacing elements (21) are made from fibre-reinforced plastic.

16. Wall element according to claim 1, characterized in that the thickness D2 of the second zone is 5 to 18 cm.

17. Wall element according to claim 1, characterized in that the second zone has a weight of 1 to 3 kg/m$^2$.

18. Wall element according to claim 1, characterized in that the usability deformation path W is at least 90% of the thickness D of the wall element.

19. Wall element according to claim 1, characterized in that the dynamic deformation resistance of the wall element for a spherical pressure surface with a diameter of 15 cm is between 2 and 4 kN.

20. Wall element according to claim 1, characterized in that the dynamic deformation resistance over the usable deformation range W has a substantially constant value, with initially higher values.

21. Wall element according to claim 1, characterized in that the wall element is subdivided into at least two sectors (1a, 1b, 1c), the subdivision being formed by an at least partial separation (36, 37) of the cover plate (10).

22. Partition wall (40) in front of passenger seats in motor vehicles or aircraft, characterized by at least one wall element (1) according to any one of the preceding claims and by a frame (45) fixed on both sides as a fixed substrate (5).

23. Floor covering in stationary installations, characterized by several wall elements (1) placed on a floor in accordance with any one of the claims 1 to 21.

**Revendications**

1. Elément de paroi (1) absorbant les chocs pour le freinage avec ménagement d'un corps humain venant heurter un obstacle, en particulier du choc d'une tête dans des véhicules automobiles ou des avions , qui comporte au moins deux zones (10, 20), l'épaisseur (D2) de la seconde zone (20) étant égale au moins au double de l'épaisseur (D1) de la première zone (10), la première zone étant composée d'une plaque de recouvrement (10) légère, déformable plastiquement, comportant une couche de revêtement supérieure mince (11), une couche de revêtement inférieure mince(12) et, entre ces couches, une âme d'appui déformable (13), légère, présentant des espaces vides, la seconde zone (20) comportant des éléments déformables plastiquement (21) qui sont liés avec la couche de revêtement inférieure (12) et qui prennent appui sur une base solide (5), caractérisée en ce que la plaque de recouvrement de la première zone (10) est une plaque de recouvrement (10) du type sandwich et en ce que les éléments de la seconde zone (20) sont des entretoises individuelles (21), discrètes, distantes les unes des autres et qui portent la plaque de recouvrement (10).

2. Elément de paroi suivant la revendication 1 caractérisé en ce que l'épaisseur (D2) de la seconde zone (20) est de 3 à 10 fois l'épaisseur (D1) de la première zone (10).

3. Elément de paroi suivant la revendication 1 caractérisé en ce que le poids de la plaque de recouvrement (10) est compris entre 2 et 3,5 kg/m$^2$.

4. Elément de paroi suivant la revendication 1 caractérisé en ce que l'épaisseur (D1) de la plaque de recouvrement (10) est comprise entre 8 et 20 mm.

5. Elément de paroi suivant la revendication 1 caractérisé en ce que les couches de revêtement (11, 12) sont réalisées en aluminium.

6. Elément de paroi suivant la revendication 1 caractérisé en ce que les couches de revêtement (11, 12) ont une épaisseur allant de 0,4 à 0,6 mm.

7. Elément de paroi suivant la revendication 1 caractérisé en ce que l'âme d'appui (13) est réalisée en un matériau cellulaire.

8. Elément de paroi suivant la revendication 1 caractérisé en ce que l'âme d'appui (13) a un poids spécifique allant de 40 à 80 kg/m$^3$.

9. Elément de paroi suivant la revendication 1 caractérisé en ce que la seconde zone (20) comporte des profilés de renforcement additionnels (24), répartissant les efforts, qui sont rapportés sur la plaque de revêtement (10).

10. Elément de paroi suivant la revendication 9 caractérisé en ce que la disposition des entretoises (21) et des profilés de renforcement éventuels (24) dans la seconde zone (20) constitue une structure (25) en réseau exempte de noeuds.

11. Elément de paroi suivant la revendication 1 caractérisé en ce que les entretoises présentent une cambrure (22) refoulée préalablement.

12. Elément de paroi suivant la revendication 1 caractérisé en ce que les entretoises (21) sont constituées par des profilés de paroi s'étendant sensiblement perpendiculairement à la plaque de recouvrement (10).

13. Elément de paroi suivant la revendication 1 caractérisé en ce que les entretoises (21) sont du type feuille (21.5), de forme arquée (21.6), de forme tubulaire (21.8) ou en forme de colonne (21.9), cylindrique ou conique (21.11).

14. Elément de paroi suivant la revendication 1 caractérisé en ce que les entretoises sont constituées de tôle d'aluminium ayant une épaisseur de 1-2 mm.

15. Elément de paroi suivant la revendication 1 caractérisé en ce que les couches de revêtement (11, 12) et/ou les entretoises (21) sont constituées d'une matière plastique renforcée par des fibres.

16. Elément de paroi suivant la revendication 1 caractérisé en ce que l'épaisseur (D2) de la seconde zone (20) va de 5 à 18 cm.

17. Elément de paroi suivant la revendication 1 caractérisé en ce que la seconde zone (20) a un poids allant de 1 à 3 kg/m$^2$.

18. Elément de paroi suivant la revendication 1 caractérisé en ce que la distance de déformation utilisable (W) est égale à au moins 90% de l'épaisseur (D) de l'élément de paroi.

19. Elément de paroi suivant la revendication 1 caractérisé en ce que la résistance à la déformation dynamique de l'élément de paroi, pour une surface de pression sphérique ayant un diamètre de 15 cm, est comprise entre 2 et 4 kN.

20. Elément de paroi suivant la revendication 1 caractérisé en ce que la résistance à la déformation dynamique dans le domaine de déformation utilisable (W) a une valeur sensiblement constante avec des valeurs tendant à être plus élevées au début.

21. Elément de paroi suivant la revendication 1 caractérisé en ce qu'il est subdivisé en au moins deux secteurs (1a, 1b, 1c), la subdivision étant réalisée par au moins une séparation partielle (36, 37) de la plaque de recouvrement (10).

22. Paroi de séparation (40) pour des sièges de passagers dans des véhicules automobiles ou des avion caractérisé par au moins un élément de paroi (1) suivant l'une quelconque des revendications précédentes et par un châssis (45) fixé des deux côtés en tant que base solide (5).

23. Revêtement de sol dans des installations stationnaires caractérisé par plusieurs éléments de paroi (1) suivant l'une quelconque des revendications 1 à 21 apposés sur le sol.

Fig. 1a

Fig. 1b

Fig. 2a

Fig. 2b

Fig. 2c

Fig. 3a

Fig. 3b

Fig. 4a

Fig. 4b

Fig. 5

Fig. 6

Fig. 7a

Fig. 7b

Fig. 7c

Fig. 8

Fig. 9

Fig. 12

Fig. 10a

Fig. 10b

Fig. 11a

Fig. 11b

Fig. 14b

Fig. 14a

Fig. 13

Fig. 15

Fig. 16